# EUROPEAN PATENT SPECIFICATION

(11) **EP 1 999 068 B1**
(45) Date of publication and mention of the grant of the patent: **29.09.2010**
(21) Application number: 07861249.6
(22) Date of filing: 23.02.2007
(51) Int. Cl.: C12Q 1/68, B01D 11/00, B01J 20/00, B01D 15/38, B01J 20/291, B01J 20/22, B01J 20/29

(54) **REVERSIBLE BIOGEL FOR MANIPULATION AND SEPARATION OF SINGLE-WALLED CARBON NANOTUBES**
UMKEHRBARES BIOGEL ZUR BEHANDLUNG UND TRENNUNG VON EINZELWAND-KOHLENSTOFFNANORÖHRCHEN
BIOGEL REVERSIBLE POUR LA MANIPULATION ET LA SEPARATION DE NANOTUBES DE CARBONE A UNE PAROI

(30) Priority: 24.03.2006 US 785493 P
(43) Date of publication of application: 10.12.2008
(73) Proprietor: Rensselaer Polytechnic Institute, Troy, NY 12180 (US)
(72) Inventor: MCGOWN, Linda, Troy, NY 12180 (US); NALAMASU, Omkaram, San Jose, CA 95138 (US); YU, Yuehua, Troy, NY 12180 (US)
(74) Representative: Chapman, Paul William
(86) International application number: PCT/US2007/004866
(87) International publication number: WO 2008/048352

(56) References cited:
- US-A1- 2003 168 385
- US-A1- 2004 241 718
- US-A1- 2005 009 039
- US-A1- 2006 054 555
- CHEN Z ET AL: "Bulk Separative Enrichment in Metallic or Semiconducting Single-Walled Carbon Nanotubes" NANO LETTERS, ACS, WASHINGTON, DC, US, vol. 3, no. 9, 20 August 2003 (2003-08-20), pages 1245-1249, XP002993651 ISSN: 1530-6984
- DAVIS J T: "G-Quartets 40 Years Later: From 5?-GMP to Molecular Biology and Supramolecular Chemistry" ANGEWANDTE CHEMIE INTERNATIONAL EDITION, vol. 43, no. 6, 27 January 2004 (2004-01-27), pages 668-698, XP002554952
- DOWLING V A ET AL: "A REVERSIBLE GEL FOR CHIRAL SEPARATIONS" ANALYTICAL CHEMISTRY, AMERICAN CHEMICAL SOCIETY. COLUMBUS, US, vol. 76, no. 15, 1 August 2004 (2004-08-01), pages 4558-4563, XP001209660 ISSN: 0003-2700
- CHANTOT J F ET AL: "Physico-chemical properties of nucleosides. 4. -- Gel formation by guanosine and its analogues" BIOCHIMIE, vol. 53, no. 3, 1971, pages 347-354, XP002554953
- DAVIS J T ET AL: "Supramolecular architectures generated by self-assembly of guanosine derivatives" CHEMICAL SOCIETY REVIEWS, vol. 36, no. 2, 7 November 2006 (2006-11-07), pages 296-313, XP002554954
- YU Y ET AL: "Tunable Thermoassociation of Binary Guanosine Gels" JOURNAL OF PHYSICAL CHEMISTRY B, vol. 112, no. 4, 9 January 2008 (2008-01-09), pages 1130-1134, XP002554955
- DAVIS G.: 'Quartets 40 Years Later: From 5'-GMP to Molecular Biology and Supramolecular Chemistry.' SUPRAMOLECULAR CHEMISTRY ANGEW CHEM. INT. ED. vol. 43, 2004, pages 669 - 693
- DOWLING ET AL.: 'A reversible gel for chiral separations.' ANALYTICAL CHEMISTRY vol. 76, no. 15, August 2004, pages 4558 - 4563
- CHANTOT ET AL.: 'Physico-chemical properties of nucleosides.' BIOCHIMIE vol. 53, 1971, pages 347 - 354

## Description

### BACKGROUND OF THE INVENTION

Carbon exists in at least 8 different allotypes, one of which is a nanotube form.

The unique properties of carbon nanotubes (CNTs), more specifically, single walled carbon nanotubes (SWNT) have made them excellent candidates for applications in bio-sensing, (Wohlstadter, J.N., et al., Adv. Mat. 2003, 15, 1184), gene delivery (Pantarotto, D., et al., Angew. Chem., Int. Ed. 2004, 43, 5242), fuel cells (Li, W., et al., Carbon 2002, 40, 791) and nanofabrication (Wei, B.O., et al., Nature 2002, 416, 495).

Single walled carbon nanotubes (SWNTs) are hollow, tubular fullerene molecules consisting essentially of sp2-hybridized carbon atoms typically arranged in hexagons and pentagons. SWNTs typically have diameters in the range of about 0.5 nanometers (nm) and about 3.5 nm, and lengths usually greater than about 50 nm (B. I. Yakobson and R. E. Smalley, American Scientist, 1997, 324 337; Dresselhaus, et al., Science of Fullerenes and Carbon Nanotubes,1996, San Diego: Academic Press, Ch. 19). SWNTs are distinguished from each other by a double index (n, m), where n and m are integers that describe how to cut a single strip of hexagonal graphite such that its edges join seamlessly when the strip is wrapped onto the surface of a cylinder. When n=m, the resultant tube is said to be of the "armchair" or (n, n) type, since when the tube is cut perpendicularly to the tube axis, only the sides of the hexagons are exposed and their pattern around the periphery of the tube edge resembles the arm and seat of an armchair repeated n times. When m=0, the resultant tube is said to be of the "zig-zag" or (n, 0) type, since when the tube is cut perpendicular to the tube axis, the edge is a zig-zag pattern. Where n#m and m≠0, the resulting tube has chirality and contains a helical twist to it, the extent of which is dependent upon the chiral angle.

Considerable research effort has therefore been devoted to development of methods to achieve stable suspensions of highly dispersed CNTs (Chen, J., et al., Science 1998, 282, 95; Liu, J., et al., Science 1998, 280, 1253; Wang, Y., et al., J. Am. Chem. Soc. 2006, 128, 95; Holzinger, M., et al., Angew. Chem., Int. Ed. 2001, 40, 4002; Mickelson, E.T., et al., J. Phys. Chem. B 1999, 103, 4318; Zheng, M., et al., Nature Materials 2003, 2, 338; Ortiz-Acevedo, A., et al., J. Am. Chem. Soc. 2005, 127, 9512; O'Connell, M.J., et al., Chem. Phys. Lett. 2001, 342, 265; Liu, P. European Polymer Journal 2005, 41, 2693; Zhao, B., et al., J. Am. Chem. Soc. 2005, 127, 8197; Chen, J., et al., J. Phys. Chem. B 2001, 105, 2525; O'Connell, M. J., et al., Science 2002, 297, 593 and Islam, M.F., et al., Nano Lett. 2003, 3, 269).

Progress, however, has been impeded, by two major hurdles. First, their poor solubility in both aqueous and organic solvents makes them difficult to manipulate and functionalize. Second, CNTs are generally formed as heterogeneous mixtures of metallic and semiconducting tubes with varying chiralities. In order to separate and purify the different forms of CNTs in a sample, they must first be solubilized in an appropriate medium.

Consequently, there remains a long felt need for methods to achieve simple, rapid and nondestructive solubilization of carbon nanotubes and SWNTs in particular.

### SUMMARY OF THE INVENTION

The present invention provides the use of novel, binary guanosine gels for simple, rapid and nondestructive solubilization of individual single walled carbon nanotubes (SWNTs) at high concentrations. The gels exhibit selectivity between metallic and semiconducting SWNTs and among SWNTs with different chiralities.

The present invention includes binary gels and further, gels based on combinations of at least two guanosine compounds, in which a hydrophilic (highly soluble in water) guanosine compound is mixed with a relatively insoluble hydrophobic guanosine compound.

Accordingly, one embodiment of the invention provides binary guanosine gels comprising guanosine (GUO) and guanosine 5' monophosphate (GMP) wherein the ratio of GUO:GMP is from 0.08 to 0.25.

In one embodiment the ratio of GUO:GMP is 0.25.

In one embodiment the ratio of GUO:GMP is 0.2.

In one embodiment the ratio of GUO:GMP is 0.08.

The gels of the present invention are unique in that they demonstrate a range of thermoresponsive behavior including thermoassociative behavior. Accordingly, in one embodiment the gels of the present invention have a viscosity which is observably higher at room temperature than it is at a temperature less than room temperature such as on refrigeration.

The thermoassociative behavior of the binary guanosine gels of the present invention is also observably stable over a wide range of pH. Thus, in accordance with the present invention the preferred gels have a pH in the range of between about 5.0 and about 9.0.

In one embodiment of the invention, the binary guanosine gels have a potassium chloride concentration of at least 0.01 M. This concentration may, however be in the range of between about 0.01 to 0.5 M.

The binary gels of the present invention have been found to be useful in solubilizing and separating single walled carbon nanotubes (SWNTs). Unexpectedly this solubilization results in the partitioning metallic SWNT from semiconductive SWNTs. Therefore, in one embodiment of the invention is provided a method of enriching the fraction of metallic nanotubes in a sample comprising solubilizing individual single walled carbon nanotubes (SWNTs) in the binary guanosine gels of the invention.

Furthermore, the gels have shown promise in partitioning SWNTs by chirality. Therefore, in one embodiment of the invention is provided a method of partitioning single walled carbon nanotubes (SWNTs) by chirality comprising solubilizing said SWNTs in the binary guanosine gels of the invention.

### DETAILED DESCRIPTION OF THE INVENTION

A description of preferred embodiments of the invention follows.

According to the present invention, disclosed herein are binary guanosine gels formed by mixing soluble guanosine-5'-monophosphate (GMP) with insoluble guanosine (Guo) that exhibit unique properties that make them highly effective for SWNT dispersion.

Guanosine gels, or "G-gels", formed by individual guanosine compounds have been extensively studied (Gellert, M., et al., Proc. Natl. Acad. Sci. 1962, 48, 2013; Sasisekharan, V., and Zimmerman, S.; Davies, D.R. J. Mol. Biol. 1975, 92, 171; Proni, G., et al., Chem. Eur. J. 2000, 6, 3249; Walmsley, J.A. and Burnett, J.F. Biochemistry 1999, 38, 14063 and Davis, J.T. Angew. Chem. Int. Ed. 2004, 43, 668).

The basic building block is the G-quartet formed by Hoogsteen hydrogen bonding between each of four guanines and its two nearest neighbors. As the monomer concentration increases, the G-quartets can aggregate into columnar stacks through π-π interactions or, in the case of 5'-guanosine monophosphate (GMP), into continuous, hydrogen-bonded helices.

It is demonstrated herein that by combining the soluble GMP with the insoluble Guo in particular ratios in aqueous solution, the resulting solutions are shown to form reversible, binary G-gels with unique chiral and thermoresponsive properties that can be controlled by adjusting the Guo:GMP ratio, cation content and pH. The chirality of G-gels offers the possibility of chiral selectivity that is supported by previous work demonstrating separations of small molecules using G-gels (Dowling, V.A., et al., Anal. Chem. 2004, 15, 4558; McGown, US Pregrant Publication 2004/0241718, published December 2, 2004).

Specifically, in some proportions the gels of the present invention are formed by self-association of guanosine and 5'-guanosine monophosphate that are solution at low temperatures and then become a firm gel at higher temperatures before melting at even higher temperatures. As used herein, low temperatures are below room temperature and are between 2-20 °C while room temperature is defined as between 20-27 °C and high temperatures are defined as those above room temperature, particularly above 35 °C, above 45 °C, above 55 °C, above 65 °C or above 100°C.

It is noted that the actual transition temperatures will vary depending upon the specific gel recipe, but in general the solution phase exists below room temperature, the gel exits at and above room temperature, and the higher temperature melting occurs above 40-50 °C.

This unique thermal dependence makes this gel ideal for encapsulation of heat sensitive components such as living cells, enzymes and other biological components, since they could be added to the solution at low temperature for homogeneous distribution and then raised to room or body temperature for gelation into, for example, drug delivery devices, artificial cells, artificial tissues, artificial organs, or bioreactors for medical use or environmental bioremediation.

Similarly, nanocomponents such as carbon nanotubes (CNTs) or CNT-biological hybrids can be dispersed and stored in the solutions at low temperatures and then immobilized in the gels for use at higher temperatures. As such, nanostructures comprised of CNTs may be incorporated into the binary gels for use in applications such as fuel cells, solar cells, articifical cells or tissues for medical purposes, microreactors containing cells or enzymes for bioremediation and/ or drug delivery.

Furthermore, it is shown here that binary G-gels provide selective solubilization and dispersion of individual SWNTs, presumably through selective interactions of the nanotubes with the aromatic guanines in the chiral G-gel structures.

### EXAMPLES

### EXAMPLE 1: Binary G-gels: thermoassociative observations

Solutions of guanosine (Guo) and guanosine 5'monophosphate (GMP) in buffer (25 mM Tris buffer, pH 7.2) and then refrigerated as liquids overnight were evaluated for phase changes in different temperature ranges and across a range of cation concentration. The data are shown in Table 1. It is noted that the buffer may be modified to any suitable buffer and may even comprise water alone. The buffer may also contain cations other than potassium or no cations at all.

The phase observations labeled in the table include "L" for liquid, "VL" for viscous liquid and "G" for gel. The symbol "-" indicates no observation data for this temperature range.

**Table 1**

| **Binary G-gels** | | | | | |
|---|---|---|---|---|---|
| **gel ID** | **GUO/GMP** **[M]** | **KCl** **[M]** | **Observation** | | |
| | | | **Low Temp** **(5 °C)** | **Room Temp.** **(25 °C)** | **High Temp.** **(above 40 °C)** |
| **1056** | 0.00625/0.025 | 0.0125 | VL | L | - |
| **1057** | 0.0125/0.05 | 0.025 | G | VL | - |
| **1058** | 0.025/0.1 | 0.05 | L | G | - |
| **1059** | 0.05/0.2 | 0.1 | L | VL | G |

The data suggest that at a GUO:GMP ratio of 1:4, the thermoassociative properties of the gel (from liquid to gel on increased temperature; see ID 1058) occurs and is enhanced at higher concentrations of monomer. Compare ID 1058 with ID 1059.

### EXAMPLE 2: Binary G-gels: timing of thermoassociation

Additional studies were performed with samples having monomer concentrations between those of gel ID 1058 and 1059. Samples were prepared according to the concentrations in the table (25 mM Tris buffer, pH 7.2) and then refrigerated as liquids overnight. These data are shown in Table 2. The time, in minutes, that each sample took to reach a gel state once at room temperature was also measured. These data are listed in the table in the room temperature column. The phase observations labeled in the table include "L" for liquid, "VL" for viscous liquid and "G" for gel. The symbol "-" indicates no observation data for this temperature range.

**Table 2**

| **Additional binary G-gels** | | | | | |
|---|---|---|---|---|---|
| **gel ID** | **GUO/GMP** **[M]** | **KCl** **[M]** | **Observation** | | |
| | | | **Low Temp** **(5 °C)** | **Room Temp.** **(25 °C)** | **High Temp.** **(above 40 °C)** |
| **1063** | 0.03/0.12 | 0.06 | L | G (14 min) | - |
| **1064** | 0.035/0.14 | 0.07 | L | G (23 min) | - |
| **1065** | 0.04/0.16 | 0.08 | L | G (35 min) | - |
| **1066** | 0.045/0.18 | 0.09 | L | VL (did not gel at RT) | - |

The data shown here suggest that while maintaining a GUO/GMP ratio of 1:4, higher monomer concentrations expand the temperature window of the low temperature liquid phase.

### EXAMPLE 3: Binary G-gels: effect of cation concentration

The effects of cation concentration were investigated. Samples containing 0.025M guanosine and 0.1M guanosine 5' monophosphate were prepared having concentrations of 0.01 M, 0.03 M, 0.05 M, 0.07 M or 0.09 M potassium chloride (KCl) (25 mM Tris buffer, pH 7.2). The phase data are shown in Table 3. The phase observations labeled in the table include "L" for liquid, "VL" for viscous liquid and "G" for gel. The symbol "-" indicates no observation data for this temperature range.

**Table 3**

| **Effect of cation concentration** | | | | | |
|---|---|---|---|---|---|
| **gel ID** | **GUO/GMP** **[M]** | **KCl** **[M]** | **Observation** | | |
| | | | **Low Temp** **(5 °C)** | **Room Temp.** **(25 °C)** | **High Temp.** **(above 40 °C)** |
| **1051** | 0.025/0.1 | 0.01 | VL | G | - |
| **1052** | 0.025/0.1 | 0.03 | L | G | - |
| **1053** | 0.025/0.1 | 0.05 | L | G | - |
| **1054** | 0.025/0.1 | 0.07 | L | G | - |
| **1055** | 0.025/0.1 | 0.09 | L | G | - |

The data suggest that, while at the lowest concentration of KCl the phase transition is slightly shifted, the phase transition properties of the gel remain constant across a range of cation concentration.

### EXAMPLE 4: Binary G-gels: effect of pH

Using the same binary G-gel (0.025/0.1; GUO:GMP), the effects of pH were investigated. The data are shown in Table 4. Samples were prepared (25 mM Tris buffer, pH 7.2) and then refrigerated as liquids overnight. The time, in minutes, that each sample took to reach a gel state once at room temperature was also measured. These data are listed in the table in the room temperature column. The phase observations labeled in the table include "L" for liquid, "VL" for viscous liquid and "G" for gel. The symbol "-" indicates no observation data for this temperature range.

**Table 4**

| **Effect of pH** | | | | | |
|---|---|---|---|---|---|
| **gel ID** | **GUO/GMP** **[M]** | **pH** | **Observation** | | |
| | | | **Low Temp** **(5 °C)** | **Room Temp.** **(25 °C)** | **High Temp.** **(above 40 °C)** |
| **1072** | 0.025/0.1 | 7.2 | L | G (15 min) | - |
| **1073** | 0.025/0.1 | 8.0 | L | G (15 min) | - |
| **1074** | 0.025/0.1 | 8.8 | L | G (15 min) | - |

As shown in the table, the observed properties of the gels remained the same over the pH range of 7.2-8.8.

### EXAMPLE 5: Binary G-gels: observation matrix

An observation matrix of samples was prepared across a range of GUO and GMP concentrations. In this experiment, all samples were prepared having a GUO:GMP ratio of 1:4, pH 7.2 and KCl concentration of 0.05M in x buffer. (25 mM Tris buffer, pH 7.2).

The binary gels were observed at three temperature ranges, low temperature, room temperature and high temperature. The resultant observations are shown in Table 5 in the order of low temperature observation/room temperature observation/high temperature observation. The concentration of GUO is given in the last row running across the matrix, while the concentration ofGMP is given in the first column running down the matrix. The observations are labeled in the table include "L" for liquid, "VL" for viscous liquid and "G" for gel. The symbol "-" indicates no data for this temperature.

**Table 5**

| **Observation matrix** | | | | | | |
|---|---|---|---|---|---|---|
| **GMP** **[M]** | **Observation** | | | | | |
| **0.20** | L/L/- | L/L/- | L/L/- | LNL/- | LNL/- | -/L/G |
| **0.15** | L/L/- | L/L/- | L/VL/- | L/VL/- | -/L/G | L/G/- |
| **0.10** | L/L/- | L/L/- | L/G/- | L/G/- | L/G/- | VL/G/- |
| **0.05** | L/L/- | VL/VL/- | G/G/- | G/G/- | G/G/- | G/G/- |
| **0.0** | L/L/- | L/L/- | L/L/- | L/L/- | L/L/- | L/L/- |
| **GUO** **[M]** | **0.0** | **0.01** | **0.02** | **0.03** | **0.04** | **0.05** |

As other data herein have suggested, the most notable gel behavior occurs at higher concentrations of both monomers where the gels become viscous liquids on increased temperature.

Additional studies have failed to identify an upper boundary for the concentration of the monomers in preparing these binary gels. This boundary might only be reached at the solubility of each monomer.

### EXAMPLE 6: Preparation of SWNT suspensions

The binary G-gels disclosed herein exhibit thermoassociative behavior with gelation temperatures that decrease with increasing SWNT concentration.
Single walled carbon nanotubes (SWNTs) were solubilized in G-gels formed by mixtures of guanosine and 5'-guanosine monophosphate in aqueous solution.

Three different guanosine media were investigated. In all cases, SWNT suspensions were prepared by sonicating SWNTs in the dispersing media in bath sonicator for 15 min. Stable suspensions of as much as 5 mg/mL could be achieved simply by sonicating.

As a control or reference, the first medium was 0.25 M GMP alone in 25 mM Tris buffer, pH 7.2. GMP is highly soluble in water and does not readily form higher order structures in the absence of stabilizing K+. In contrast to the binary gels described below, up to 1.4 mg/mL SWNT could be solubilized for up to 24 h in 0.25 M GMP without Guo, after which the SWNTs precipitated. The temporary suspension could be reformed by shaking the solution.

The result shows that GMP alone does not provide stable suspension of dispersed SWNTs. Analogous experiments could not be performed for Guo since it is insoluble in water.

### Binary G-gel 1

Second, SWNTs were solubilized in a binary G-gel (Gel 1) comprised of 20 mM Guo, 250 mM GMP, (GUO:GMP ratio of 1:12.5) 50 mM KCl in 25 mM Tris buffer, pH 7.2.

Suspensions of 5µg/mL, 10 µg/mL, 20 µg/mL, 50 µg/mL, 100 µg/mL and 2 mg/mL SWNT in Gel 1 were evaluated for solubilization, dispersion and viscosity.

These suspensions were liquid between 2-25°C at SWNT concentrations < 1 mg/mL. At higher SWNT concentration, the suspensions exhibit thermoassociative behavior, forming gels at room temperature. Suspensions of as much as 5 mg/mL SWNT were stable, showing no signs of degradation or precipitation after 4 weeks.

When inverted, a vial containing 50 ug/mL SWNT in Gel 1 flowed to the bottom (inverted top) of the vial. However, a solution of 2 mg/mL SWNT in Gel 1 remained in the top (inverted bottom) of the vial as a gel when inverted.

### Binary G-gel 2

Third, SWNTs were solubilized in a binary G-gel (Gel 2) comprised of 60 mM Guo, 300 mM GMP, (GUO:GMP ratio of 1:5) 50 mM KCl in the same buffer as Gel 1. Gel 2 was found to be thermoassociative even in the absence of SWNT, forming gels at temperatures ≥ 33 °C.

Suspensions of 6 µg/mL, 12 µg/mL, 30 µg/mL, 60 µg/mL, 120 µg/mL and 240 µg/mL SWNT in Gel 2 were evaluated for solubilization, dispersion and viscosity.

The gelation temperature was found to decrease with increasing SWNT concentration until, above 2 mg/mL SWNT, the suspension is a gel even at 2 °C. Concentrations as high as 2.4mg/mL could be suspended in G-gel 2.

For both Gels 1 and 2, recovery ofSWNTs could be achieved by heating the suspension above its melting temperature, causing the SWNTs to precipitate.

### EXAMPLE 7: Optical microscopy

Optical microscopy using a simple light microscope at a resolution of 200x, was performed on G-gels with and without SWNTs. Gels were prepared with 10ug/mL SWNT or no SWNT and allowed to dry. In both cases the dehydrated gel exhibited crystallinity but the crystallinty was more pronounced and regular in the presence of SWNTs. These results suggest that SWNTs promote the self-assembly of the gels and become an intergal part of the gel structure.

### EXAMPLE 8: Scanning electron microscopy (SEM) and atomic force microscopy (AFM) of SWNT

Atomic force microscopy (AFM) of 2 mg/mL SWNT in Gel 1 showed well-dispersed SWNTs with diameters of ∼2 nm (from line scan analysis), which is consistent with diameters of ∼0.9-1.7 nm that were obtained from micro-Raman spectra of the radial breathing mode (see Example 9 below).

The average length of the suspended SWNTs is 1 µm, which is similar to their length in the starting material. Thicker regions of the SWNTs were observed and may be individual or bundled SWNTs, or G-gel bridges between adjacent SWNTs.

Atomic force microscopy (AFM) of 240 µg/mL SWNT in Gel 2 showed that SWNTs were individually dispersed in the gel. There was evidence of parallel alignment suggesting a high degree of organization that might be increased by optimization of experimental conditions and application of an electric field. The presence of a thicker structures observed in the image may be evidence of different modes of interaction between the gel and the various structures in the heterogeneous SWNT preparation, or to solubilization of both bundled and monodispersed nanotubes.

### EXAMPLE 9: Raman spectroscopy of SWNTs

Micro-Raman spectroscopy was performed of the Radial Breathing Mode (RBM) region (100-300 cm⁻¹) and the G-Band region (1400-1700 cm⁻¹) for acid treated SWNTs in aqueous suspension (reference sample) and for 1 mg/mL SWNTs in Gel 1 after one week and from the top and bottom of the gel after four weeks. Relative intensity was measured against Raman shift (cm⁻¹).

Calculations of others have shown that SWNTs with diameters d <1.1 nm are metallic with RBM frequencies of 218-280 cm⁻¹, while SWNTs with d >1.1 nm are semiconducting with RBM frequencies of 175-213 cm⁻¹. (Rao, A.M., et al., Phys. Rev. Lett., 2001, 86, 3895).

Here, it was found that the peaks in both regions are blue-shifted by 5-7 cm⁻¹ in the G-gel relative to the reference, which is evidence of interactions between the SWNTs and the G-gel structures (Dresselhaus, M.S. et al., Carbon 2002, 40, 2043). Compared to the reference, the peaks associated with the semiconducting SWNTs in the G-gel samples were diminished, indicating that the metallic tubes are preferentially solubilized in the G-gels relative to the semiconducting tubes (Krupke, R., et al., Am. Chem. Soc. 2003, 125, 3370).

Furthermore, the spectra of the suspensions after 4 weeks show evidence of selective enrichment from top to bottom of different structures within each class of SWNTs. Most notable were the relative increases of the semiconductor peak at 186 cm⁻¹ and the metallic peak shoulder at 272 cm⁻¹ in the top of the gel and the increase of the semiconductor peak at 206 cm⁻¹ in the bottom of the gel.

In the G-band region (1400-1700 cm⁻¹), the sharp peak of the semiconducting SWNTs was blue shifted from 1587 cm⁻¹ in the reference to 1592 cm⁻¹ in the G-gel suspension, which is evidence of association with the G-gel matrix. The shoulder near 1565 cm⁻¹, also attributed to semiconducting nanotubes, was less distinct in the gel and indiscernible in the sample taken from the top of the 4-week suspension.

In contrast, the broad peak of the metallic SWNTs (Dresselhaus, M.S.; et al., Carbon 2002, 40, 2043; Krupke, R. et al., Science 2003,301, 344; and
Chattopadhyay, D., et al., J. Am. Chem. Soc. 2003, 125, 3370) at 1540 cm⁻¹ was much more prominent in the G-gel than reference, especially in the sample taken from the top of the gel after 4 weeks.

These results indicate that G-gels solubilize high concentrations of SWNTs with preferential dispersion and enrichment of metallic tubes, and suggest that, as the sample ages, the SWNTs within the two classes are further distributed based on their chirality.

### EXAMPLE 10: Circular dichroism spectroscopy of SWNTs

The circular dichroism spectrum of 5 mg/mL SWNT in gel showed increased magnitudes of the positive peak at 220 nm and a negative peak at 260 nm relative to the spectrum of the gel in the absence of SWNTs. It is known that 220 nm indicates the formation of G quartet and 260 nm signals formation of secondary structure. The addition of SWNT in high concentration to the thermoassociative gels was found to destroy their thermoassociative (TA) property.

The CD results suggest that addition of carbon nanotubes results in an increase in the concentration of G-quartet in solution while concomittantly destroying or changing second structures. Based upon this finding, it is possible that the pi-pi interaction between G-quartet and SWNT may be the driving force for dispersion.

While this invention has been particularly shown and described with references to preferred embodiments thereof, it will be understood by those skilled in the art that various changes in form and details may be made therein without departing from the scope of the invention encompassed by the appended claims.

## Claims

1. A binary guanosine gel comprising guanosine and guanosine 5' monophosphate wherein the ratio of GUO:GMP is from 0.08 to 0.25.

2. The binary guanosine gel of claim 1 wherein the ratio of GUO:GMP is 0.25.

3. The binary guanosine gel of claim 1 wherein the ratio of GUO:GMP is 0.2.

4. The binary guanosine gel of claim 1 wherein the ratio of GUO:GMP is 0.08.

5. The binary guanosine gel of claim 1 having a viscosity which is higher at room temperature than its viscosity at a temperature less than room temperature.

6. The binary guanosine gel of claim 1 having a pH in the range of between 5 and 9.

7. The binary guanosine gel of claim 1 having a potassium chloride concentration of at least 0.01 M.

8. The binary guanosine gel of any one of claims 1 to 7 further comprising a carbon nanotube.

9. The binary guanosine gel of claim 8, wherein the carbon nanotube is a single walled carbon nanotube (SWNT).

10. The binary guanosine gel of any one of claims 1 to 7 further comprising a living cell.

11. The binary guanosine gel of any one of claims 1 to 7 further comprising an enzyme.

12. The binary guanosine gel of any one of claims 1 to 7 further comprising a drug.

13. A method of enriching the fraction of metallic nanotubes in a sample comprising solubilizing individual single walled carbon nanotubes (SWNTs) in the binary guanosine gel of any one of claims 1 to 7.

14. A method of partitioning single walled carbon nanotubes (SWNTs) by chirality comprising solubilizing said SWNTs in the binary guanosine gel of any one of claims 1 to 7.

## Patentansprüche

1. Binäres Guanosin-Gel, das Guanosin und Guanosin-5'-monophosphat umfasst, wobei das Verhältnis von GUO:GMP von 0,08 bis 0,25 beträgt.

2. Binäres Guanosin-Gel nach Anspruch 1, wobei das Verhältnis von GUO:GMP 0,25 beträgt.

3. Binäres Guanosin-Gel nach Anspruch 1, wobei das Verhältnis von GUO:GMP 0,2 beträgt.

4. Binäres Guanosin-Gel nach Anspruch 1, wobei das Verhältnis von GUO:GMP 0,08 beträgt.

5. Binäres Guanosin-Gel nach Anspruch 1, das eine Viskosität aufweist, die bei Raumtemperatur höher als seine Viskosität bei einer Temperatur unterhalb der Raumtemperatur ist.

6. Binäres Guanosin-Gel nach Anspruch 1, das einen pH-Wert im Bereich zwischen 5 und 9 aufweist.

7. Binäres Guanosin-Gel nach Anspruch 1, das eine Konzentration an Kaliumchlorid von mindestens 0,01 M aufweist.

8. Binäres Guanosin-Gel nach einem der Ansprüche 1 bis 7, das ferner eine Kohlenstoff-Nanoröhre umfasst.

9. Binäres Guanosin-Gel nach Anspruch 8, wobei die Kohlenstoff-Nanoröhre eine einwandige Kohlenstoff-Nanoröhre (SWNT, single walled carbon nanotube) ist.

10. Binäres Guanosin-Gel nach einem der Ansprüche 1 bis 7, das ferner eine lebende Zelle umfasst.

11. Binäres Guanosin-Gel nach einem der Ansprüche 1 bis 7, das ferner ein Enzym umfasst.

12. Binäres Guanosin-Gel nach einem der Ansprüche 1 bis 7, das ferner einen Wirkstoff umfasst.

13. Verfahren zur Anreicherung der Fraktion von metallischen Nanoröhren in einer Probe, das die Solubilisierung von einzelnen einwandigen Kohlenstoff-Nanoröhren (SWNTs) in dem binären Guanosin-Gel nach einem der Ansprüche 1 bis 7 umfasst.

14. Verfahren zur Trennung von einwandigen Kohlenstoff-Nanoröhren (SWNTs) nach Chiralität, das die Solubilisierung der SWNTs in dem binären Guanosin-Gel nach einem der Ansprüche 1 bis 7 umfasst.

## Revendications

1. Gel de guanosine binaire comprenant de la guanosine et un monophosphate de guanosine 5', dans lequel le rapport de GUO : GMP est de 0,08 à 0,25.Commencer ici.

2. Gel de guanosine binaire selon la revendication 1, dans lequel le rapport de GUO : GMP est de 0,25.

3. Gel de guanosine binaire selon la revendication 1, dans lequel le rapport de GUO : GMP est de 0,2.

4. Gel de guanosine binaire selon la revendication 1, dans lequel le rapport de GUO : GMP est de 0,08.

5. Gel de guanosine binaire selon la revendication 1, ayant une viscosité qui est supérieure à température ambiante à la viscosité à une température inférieure à la température ambiante.

6. Gel de guanosine binaire selon la revendication 1, ayant un pH dans la plage entre 5 et 9.

7. Gel de guanosine binaire selon la revendication 1, ayant une concentration en chlorure de potassium d'au moins 0,01 M.

8. Gel de guanosine binaire selon l'une quelconque des revendications 1 à 7, comprenant en outre un nanotube de carbone.

9. Gel de guanosine binaire selon la revendication 8, dans lequel le nanotube de carbone est un nanotube de carbone à une paroi (SWNT).

10. Gel de guanosine binaire selon l'une quelconque des revendications 1 à 7, comprenant en outre une cellule vivante.

11. Gel de guanosine binaire selon l'une quelconque des revendications 1 à 7, comprenant en outre une enzyme.

12. Gel de guanosine binaire selon l'une quelconque des revendications 1 à 7, comprenant en outre un médicament.

13. Procédé d'enrichissement de la fraction de nanotubes métalliques dans un échantillon, comprenant la solubilisation des nanotubes de carbone à une paroi individuels (SWNT) dans le gel de guanosine binaire selon l'une quelconque des revendications 1 à 7.

14. Procédé de séparation de nanotubes de carbone à une paroi (SWNT) par chiralité, comprenant la solubilisation desdits SWNT dans le gel de guanosine binaire selon l'une quelconque des revendications 1 à 7.
